(19) Europäisches Patentamt
European Patent Office
Office européen des brevets

(11) Veröffentlichungsnummer : **0 105 027**
**B1**

(12) # EUROPÄISCHE PATENTSCHRIFT

(45) Veröffentlichungstag der Patentschrift : **06.05.87**

(51) Int. Cl.⁴ : **C 09 B 62/085**, D 06 P 3/66

(21) Anmeldenummer : **83810372.9**

(22) Anmeldetag : **19.08.83**

(54) **Reaktivfarbstoffe, deren Herstellung und Verwendung.**

(30) Priorität : **25.08.82 CH 5055/82**

(43) Veröffentlichungstag der Anmeldung : **04.04.84 Patentblatt 84/14**

(45) Bekanntmachung des Hinweises auf die Patenterteilung : **06.05.87 Patentblatt 87/19**

(84) Benannte Vertragsstaaten : **CH DE FR GB IT LI**

(56) Entgegenhaltungen :
**FR-A- 1 246 743**
**US-A- 3 084 017**

(73) Patentinhaber : **CIBA-GEIGY AG**
**Klybeckstrasse 141**
**CH-4002 Basel (CH)**

(72) Erfinder : **Begrich, Rainer, Dr.**
**Habsburgerstrasse 32**
**CH-4310 Rheinfelden (CH)**
Erfinder : **Landre, Jean-François, Dr.**
**Rue de Habsheim 153D**
**F-68400 Riedisheim (FR)**

**EP 0 105 027 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Reaktivfarbstoffe werden seit langem in grossem Umfang für das Färben und Bedrucken von Textilien aus Fasermaterialien eingesetzt, und es steht heute eine grosse Anzahl von brauchbaren Reaktivfarbstoffen mit unterschiedlichen Eigenschaften und für verschiedene Anwendungsbereiche zur Verfügung. Angesichts der immer höheren Anforderungen an Reaktivfärbungen in bezug auf Wirtschaftlichkeit. Applikationstechnik und Echtheitsniveau ist der erreichte technische Stand aber vielfach nicht voll befriedigend. Besonders die Fixierausbeute ist bei vielen Reaktivfarbstoffen ungenügend.

So ist häufig festzustellen, dass der Fixiergrad zu gering, und die Differenz zwischen Ausziehgrad und Fixiergrad zu gross ist (hoher Seifverlust), so dass ein erheblicher Teil des Reaktivfarbstoffes für den Färbevorgang verloren geht. Die Bereitstellung von verbesserten Reaktivfarbstoffen ist somit erwünscht.

In der FR-A-1 246 743 ist u. a. ein Reaktivfarbstoff beschrieben, dessen Triazinylring neben einer abspaltbaren anionischen $SO_3H$-Gruppe noch eine Benzothiazolyl-2, p-phenylamino-Gruppe aufweist. Dieser reaktiven $SO_3H$-Gruppe wird eine gewisse Instabilität zugeschrieben (K. Venkataramam, The Chemistry of Synthetic Dyes, Vol. VI (1972), Seite 153). Die meisten Farbstoffe der genannten französischen Patentschrift sind rotstichig.

Der vorliegenden Erfindung lag die Aufgabe zugrunde, neue Reaktivfarbstoffe zu finden, die stabil sind und zugleich auf cellulosehaltigem Fasermaterial nass- und lichtechte Färbungen in gelben bis grünstichig gelben Tönen ergeben.

Es hat sich gezeigt, dass die weiter unten definierten neuen Reaktivfarbstoffe diesen Anforderungen genügen.

Gegenstand der Erfindung sind Reaktivfarbstoffe der Formel

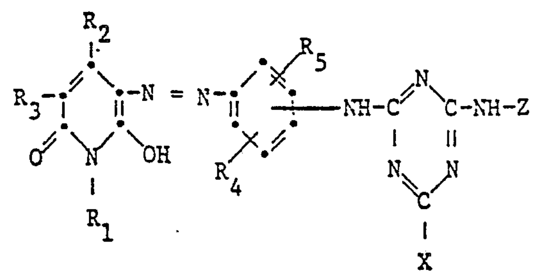

(1)

worin $R_1$ Wasserstoff oder gegebenenfalls substituiertes $C_1$-$C_4$-Alkyl oder Phenyl, $R_2$ Wasserstoff oder gegebenenfalls substituiertes $C_{1-4}$-Alkyl, $R_3$ Wasserstoff, Cyano, Carbamoyl oder Sulfomethyl, $R_4$ und $R_5$ unabhängig voneinander Wasserstoff, $C_{1-4}$-Alkyl, $C_{1-4}$-Alkoxy, Halogen, Carboxy oder Sulfo, X Fluor, Chlor oder Brom, und Z ein gegebenenfalls substituierter Benzthiazolyl-(2)-phenyl-Rest ist.

Als $C_{1-4}$-Alkylrest kommt für $R_1$ und $R_2$ in Formel (1) ein geradkettiger oder verzweigter Alkylrest in Betracht, der auch substituiert sein kann, z. B. durch Halogen, Hydroxy, Cyan, Amino, Sulfo oder Sulfato. Als Beispiele seien genannt : Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl, β-Aminoäthyl, Sulfomethyl, β-Sulfoäthyl und β-Sulfatoäthyl. Falls $R_1$ ein Phenylrest ist, kann dieser ebenfalls weiter substituiert sein, beispielsweise durch Methyl, Methoxy, Chlor oder Sulfo. Als Beispiele seien genannt : 4'-Methylphenyl, 4'-Methoxyphenyl, 4'-Chlorophenyl und 4'-Methyl-3'-sulfophenyl.

Mögliche Substituenten $R_4$ und $R_5$ sind z. B. : Methyl, Aethyl, Propyl, Isopropyl, Butyl, Isobutyl, sek.-Butyl, tert.-Butyl, Methoxy, Aethoxy, Propyloxy, Isopropyloxy, Butyloxy, Isobutyloxy, sek.-Butyloxy, tert.-Butyloxy, Fluor, Chlor und Brom. Vorzugsweise ist mindestens einer der Substituenten $R_4$ und $R_5$ eine Sulfogruppe, als weitere Substituenten kommen insbesondere Methyl, Methoxy, Chlor oder Sulfo in Betracht.

Als Substituenten am Benzthiazolyl-(2)-phenyl-Rest kommen vor allem Methyl und Sulfo in Frage, die sowohl an den Benzthiazolkern als auch an den Phenylring gebunden sein können.

Bevorzugte Untergruppen der Reaktivfarbstoffe der Formel (1) sind :

a) Reaktivfarbstoffe der Formel

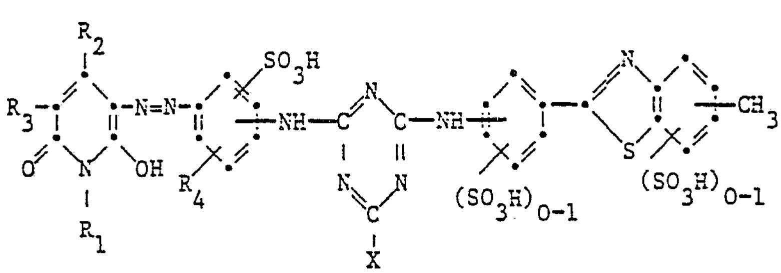

(2)

worin $R_1$, $R_2$, $R_3$ und X die unter Formel (1) angegebenen Bedeutungen haben, und $R_4$ Wasserstoff, Methyl, Methoxy, Chlor oder Sulfo ist.

b) Reaktivfarbstoffe gemäss a), worin $R_1$ Wasserstoff oder gegebenenfalls substituiertes $C_{1-4}$-Alkyl, und $R_2$ $C_{1-4}$-Alkyl ist, und $R_3$, $R_4$ und X die unter a) angegebenen Bedeutungen haben.

c) Reaktivfarbstoffe gemäss b), worin $R_1$ Wasserstoff, Methyl, Aethyl oder Sulfoäthyl, und $R_2$ Methyl ist, und $R_3$, $R_4$ und X die unter b) angegebenen Bedeutungen haben.

d) Reaktivfarbstoffe gemäss c), worin $R_3$ Carbamoyl ist, und $R_1$, $R_2$, $R_4$ und X die unter c) angegebenen Bedeutungen haben.

e) Reaktivfarbstoffe gemäss b), worin $R_3$ Carbamoyl ist, und $R_1$, $R_2$, $R_4$ und X die unter b) angegebenen Bedeutungen haben.

f) Reaktivfarbstoffe gemäss e), der Formel

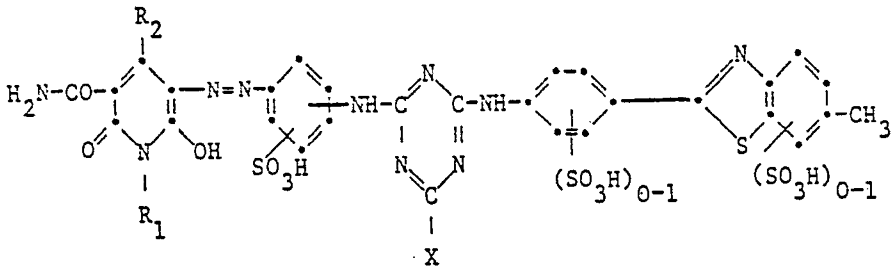

(3)

worin $R_1$ Wasserstoff oder $C_{1-4}$-Alkyl, $R_2C_{1-4}$-Alkyl, und X Fluor, Chlor oder Brom ist.

g) Reaktivfarbstoff gemäss d) oder f), der Formel

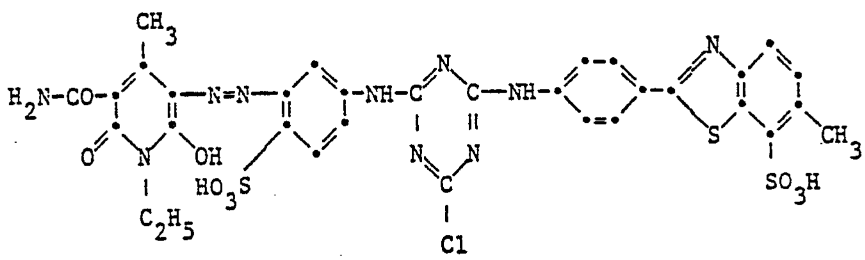

(4)

Die Farbstoffe der Formel (1) sind faserreaktiv, da sie im dem s-Triazinrest ein abspaltbares Halogenatom enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (I) ist dadurch gekennzeichnet, dass man in beliebiger Reihenfolge 6-Hydroxypyridone-(2) der Formel

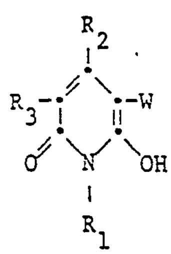

(5)

worin W Wasserstoff oder Carbamoyl ist, Diaminobenzole der Formel

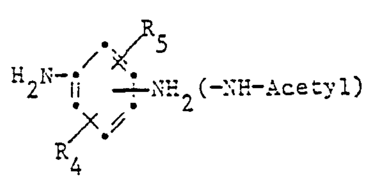

(6)

2,4,6-Trihalogen-s-triazine der Formel

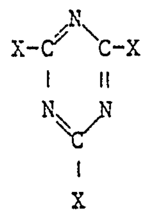

(7)

und Benzthiazolyl-(2)-phenylamine der Formel

$$H_2N—Z \qquad (8)$$

durch Diazotierung, Kupplung und Kondensation zu Reaktivfarbstoffen der Formel (1) umsetzt.

Gegebenenfalls verwendet man statt eines Diaminobenzols der Formel (6) die entsprechende Aminoacetylaminobenzolverbindung und spaltet den Acetylrest nach der Diazotierung und Kupplung durch Verseifen wieder ab.

Falls im 6-Hydroxypyridon-(2) der Formel (5) W Carbamoyl ist, wird den Carbamoylrest W bei der verfahrensgemässen Kupplung abgespalten.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten der Formeln (5) bis (8) frei gewählt werden kann.

Dabei hängt es von der Struktur der Ausgangsstoffe ab, welche der möglichen Verfahrensvarianten die besten Resultate ergeben, oder unter welchen speziellen Bedingungen, z. B. bei welcher Kondensationstemperatur, die Reaktion am vorteilhaftesten auszuführen ist.

Wichtige Verfahrensvarianten sind dadurch gekennzeichnet, dass man :

1. 2,4,6-Trihalogen-s-triazin der Formel (7) mit einem Diaminobenzol der Formel (6) kondensiert, das erhaltene primäre Kondensationsprodukt diazotiert und auf ein 6-Hydroxypyridon-(2) der Formel (5) kuppelt, und zuletzt ein Halogenatom im s-Triazinrest durch Kondensation mit einem Benzthiazolyl-(2)-phenylamin der Formel (8) durch einen Rest —NH—Z ersetzt ;

2. ein Diaminobenzol der Formel (6), bzw. eine entsprechende Aminoacetylaminobenzolverbindung, diazotiert und auf ein 6-Hydroxypyridon-(2) der Formel (5) kuppelt (und gegebenenfalls den Acetylrest durch Verseifung abspaltet), die Azoverbindung mit 2,4,6-Trihalogen-s-triazin der Formel (7) kondensiert, und das erhaltene Monokondensationsprodukt mit einem Benzthiazolyl-(2)-phenylamin der Formel (8) kondensiert ;

3. ein Diaminobenzol der Formel (6) mit 2,4,6-Trihalogen-s-triazin der Formel (7) kondensiert, das primäre Kondensationsprodukt mit einem Benzthiazolyl-(2)-phenylamin der Formel (8) kondensiert, das entstandene sekundäre Kondensationsprodukt diazotiert und auf ein 6-Hydroxy-pyridon-(2) der Formel (5) kuppelt ;

4. ein Diaminobenzol der Formel (6), bzw. eine entsprechende Aminoacetylaminobenzolverbindung diazotiert und auf ein 6-Hydroxypyridon-(2) der Formel (5) kuppelt (und gegebenenfalls den Acetylrest durch Verseifung abspaltet), ferner 2,4,6-Trihalogen-s-triazin der Formel (7) und ein Benzthiazolyl-(2)-phenylamin der Formel (8) kondensiert, und beide Zwischenprodukte miteinander kondensiert ;

5. 2,4,6-Trihalogen-s-triazin der Formel (7) mit einem Benzthiazolyl-(2)-phenylamin der Formel (8) kondensiert, das Monokondensationsprodukt mit einem Diaminobenzol der Formel (6) kondensiert, das erhaltene sekundäre Kondensationsprodukt diazotiert und auf ein 6-Hydroxy-pyridon-(2) der Formel (5) kuppelt.

Die bevorzugte Herstellungsweise des Reaktivfarbstoffes der Formel (4) ist dadurch gekennzeichnet, dass man 1-Amino-3-acetylamino-benzol-6-sulfonsäure diazotiert und auf 1-Aethyl-4-methyl-5-carbamoyl-6-hydroxy-pyridon-(2) kuppelt, die Acetylgruppe durch Verseifung abspaltet, die erhaltene Aminomonoazoverbindung mit Cyanurchlorid kondensiert, und das erhaltene primäre Kondensationsprodukt mit Dehydrothio-p-toluidin-7-sulfonsäure kondensiert, so dass der Reaktivfarbstoff der Formel (4) erhalten wird, oder dass man 1-Amino-3-acetylaminobenzol-6-sulfonsäure diazotiert und auf 1-Aethyl-4-methyl-5-carbamoyl-6-hydroxy-pyridon-(2) kuppelt, und die Acetylgruppe durch Verseifung abspaltet, ferner Cyanurchlorid mit Dehydrothio-p-toluidin-7-sulfonsäure kondensiert, und beide Zwischenprodukte miteinander kondensiert.

In den nachfolgenden Beispielen ist die Herstellung der Zwischenprodukte nicht in allen Fällen beschrieben, sie ergibt sich jedoch ohne weiteres aus dem oben gesagten.

Als Ausgangsstoffe, die zur Herstellung der faserreaktiven Azofarbstoffe der Formel (1) verwendet werden können, seien genannt:

6-Hydroxypyridone-(2) der Formel (5)
1-Aethyl-3-carbamoyl-4-methyl-6-hydroxy-pyridon-(2),
1,4-Dimethyl-3-carbamoyl-6-hydroxy-pyridon-(2),
1-Aethyl-3-sulfomethyl-4-methyl-6-hydroxy-pyridon-(2),
1-Phenyl-3-sulfomethyl-4-methyl-6-hydroxy-pyridon-(2),
3-Sulfomethyl-4-methyl-2,6-dihydroxypyridin,
3-Cyan-4-methyl-2,6-dihydroxypyridin,
1-Aethyl-3-cyan-4-methyl-6-hydroxy-pyridon-(2),
3-Carbamoyl-4-methyl-2,6-dihydroxypyridin,
1-Aethyl-3-sulfomethyl-4-methyl-5-carbamoyl-6-hydroxy-pyridon-(2),
3-Sulfomethyl-4-methyl-5-carbamoyl-2,6-dihydroxypyridin,
1-Aethyl-3-cyan-4-methyl-5-carbamoyl-6-hydroxy-pyridon-(2),
1-Aethyl-4-methyl-2,6-dihydroxy-pyridin,
1-Sulfoäthyl-3-carbamoyl-4-methyl-6-hydroxypyridon-(2),
4-Methyl-2,6-dihydroxypyridin,
1,4-Dimethyl-6-hydroxy-pyridon-(2),
1-n-Propyl- oder -Isopropyl-4-methyl-6-hydroxy-pyridon-(2),
1-n-Butyl-4-methyl-6-hydroxy-pyridon-(2),
1-n-Propyl- oder -Isopropyl-3-carbamoyl-4-methyl-6-hydroxy-pyridon-(2),
1-n-Butyl-3-carbamoyl-4-methyl-6-hydroxy-pyridon-(2).

Diaminobenzole der Formel (6)

1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methyl-benzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 1,3-Diamino-4-nitrobenzol, 1-Amino-3-acetylaminobenzol (nachträglich verseift), 1-Amino-3-acetylamino-6-methylbenzol (nachträglich verseift), 1-Amino-3-acetylamino-6-methoxybenzol (nachträglich verseift), 1-Amino-3-acetylaminobenzol-4-sulfonsäure (nachträglich verseift), 1-Amino-3-acetylaminobenzol-6-sulfonsäure (nachträglich verseift), 1-Amino-3-acetylamino-4-methylbenzol-6-sulfonsäure (nachträglich verseift), 1-Amino-4-acetylaminobenzol-2-sulfonsäure (nachträglich verseift), 1-Amino-3-acetylamino-6-methylbenzol-4-sulfonsäure (nachträglich verseift), 1-Amino-3-acetylamino-6-methoxybenzol-4-sulfonsäure (nachträglich verseift), 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 1,4-Diamino-6-chlorbenzol-2-sulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure.

2,4,6-Trihalogen-s-triazine der Formel (7)
2,4,6-Trifluor-s-triazin (Cyanurfluorid),
2,4,6-Trichlor-s-triazin (Cyanurchlorid),
2,4,6-Tribrom-s-triazin (Cyanurbromid).

Benzthiazolyl-(2)-phenylamine der Formel (8)
2-o-Aminophenyl-4-methyl-benzthiazol (Dehydrothio-o-toluidin),
2-p-Aminophenyl-6-methyl-benzthiazol (Dehydrothio-p-toluidin),
2-p-Aminophenyl-6-methyl-7-sulfo-benzthiazol (Dehydrothio-p-toluidin-7-sulfonsäure),
2-(p-Amino-m-sulfo)phenyl-6-methyl-benzthiazol,
2-(p-Amino-m-sulfo)phenyl-6-methyl-7-sulfo-benzthiazol,
2-p-Aminophenyl-benzthiazol,
Dehydrothio-xylidin,
Dehydrothio-xylidin-sulfonsäure,
Primulinsulfonsäure.

Die Diazotierung der Diaminobenzole der Formel (6) erfolgt in der Regel durch Einwirkung salpetriger Säure in wässrig-mineralsaurer Lösung bei tiefer Temperatur, die Kupplung auf das 6-Hydroxypyridin-(2) der Formel (5) bei schwach sauren, neutralen bis schwach alkalischen pH-Werten.

Die Kondensationen des 2,4,6-Trihalogen-s-triazins der Formel (7) mit den Diaminobenzolen der

Formel (6) bzw., bei vorangehender Kupplung, mit den Aminomonoazoverbindungen erfolgen vorzugsweise in wässriger Lösung oder Suspensionen, bei niedrigen Temperaturen, vorzugsweise zwischen 0° und 10 °C und bei schwach saurem, neutralem bis schwach alkalischem pH-Wert. Vorteilhaft wird der bei der Kondensation freiwerdene Halogenwasserstoff laufend durch Zugabe wässriger Alkalihydroxide, -carbonate oder -bicarbonate neutralisiert. Für die weitere Umsetzung der so erhaltenen Halogentriazinverbindungen bzw. für die Umsetzung des 2,4,6-Trihalogen-s-triazins mit den Verbindungen der Formel (8) setzt man die freien Amine oder deren Salze, bevorzugt in Form des Hydrochlorids, ein. Die Umsetzung wird bei Temperaturen etwa zwischen 0 und 50 °C, bevorzugt zwischen 5 und 25 °C, unter Zusatz säurebindender Mittel, bevorzugt Natriumcarbonat, in einem pH-Bereich von 2 bis 8, bevorzugt 5 bis 6,5, durchgeführt.

Die Kondensation des Halogentriazins mit einer Verbindung der Formel (8) kann vor oder nach der Kondensation des Halogentriazins mit einem Diamin der Formel (6) geschehen. Die Kondensation des Halogentriazins mit einer Verbindung der Formel (8) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Reaktivfarbstoffe der Formel (1) eignen sich zum Färben und Bedrucken von verschiedensten Materialien, wie Seide, Leder, Wolle, Polyamidfasern und Polyurethanen, insbesondere aber cellulosehaltiger Materialien faseriger Struktur, wie Leinen, Zellstoff, regenerierte Cellulose und vor allem Baumwolle. Sie eignen sich für das Ausziehverfahren, besonders bei höheren Temperaturen, und ebenso zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Sie eignen sich auch zum Druck, insbesondere auf Baumwolle, ebenso aber auch zum Bedrucken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Die Reaktivfarbstoffe der Formel (1) zeichnen sich durch hohe Reaktivität und gutes Fixiervermögen aus. Sie ergeben Färbungen mit guten Nass- und Lichtechtheiten und hoher Farbstärke und hoher Faser-Farbstoff-Bindungsstabilität, sowohl in saurem als auch in alkalischem Bereich.

Gegenüber den Azopyridon-Reaktivfarbstoffen der Deutschen Offenlegungsschrift 29 27 718 zeichnen sich die erfindungsgemässen Reaktivfarbstoffe der Formel (1) durch eine höhere färberische Ausbeute auf Cellulosefasern und eine sehr gute Wasserlöslichkeit aus.

In den nachfolgenden Beispielen bedeuten die Teile Gewichtsteile, und die Temperaturen sind in Celsiusgraden angegeben.

## Beispiel 1

39,5 Teile 1-Aethyl-3-carbamoyl-4-methyl-5-(5′-amino-2′-sulfophenylazo)-6-hydroxy-pyridon-(2) (erhalten durch Kuppeln von 3-Amino-acetanilid-4-sulfosäure auf 1-Aethyl-3-carbamoyl-4-methyl-6-hydroxy-pyridon-(2) und anschliessende Verseifung) in 500 Teilen Wasser mit Natronlauge bei pH 7 lösen und durch Eiszugabe auf 0-5 °C kühlen. 18,4 Teile Cyanurchlorid zustürzen und danach den pH mit Natronlauge auf 4-5 halten. Nach 20 bis 30 Minuten eine neutrale Lösung von 32 Teilen Dehydrothio-p-toluidin-7-sulfonsäure in 250 Teilen Wasser zugiessen und den pH durch weitere Zugabe von Natronlauge auf 6-7 halten, gleichzeitig die Temperatur auf 40-45 °C steigern. Ca. 2 Stunden nachrühren, klärfiltrieren und zur Trockne eindampfen. Der Farbstoff der Formel.

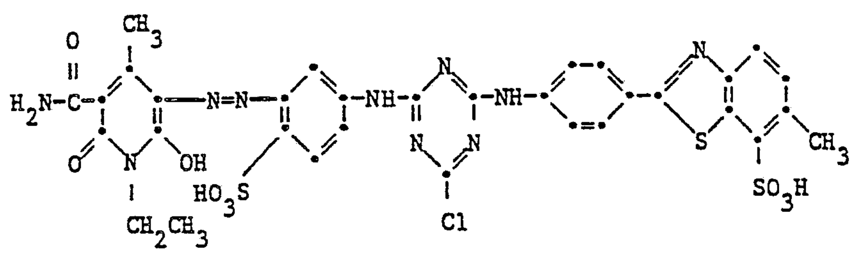

ein gelbes Pulver, färbt Baumwolle in brillanten, leicht grünstichig gelben Tönen mit sehr guten Echtheiten an.

## Beispiel 2

19 Teile Cyanurchlorid mit 500 Teilen Eis so lange verrühren, bis eine feine, gleichmässige Suspension entstanden ist. Eine neutrale Lösung von 32 Teilen Dehydrothio-p-toluidin-7-sulfosäure in

250 Teilen Wasser langsam einlaufen lassen, gleichzeitig den pH mit Natronlauge auf 4-5 halten. Kurz nachrühren, dann eine neutrale Lösung von 39,5 Teilen 1-Aethyl-3-carbamoyl-4-methyl-5-(5'-amino-2'-sulfophenylazo)-6-hydroxy-pyridon-(2) in 500 Teilen Wasser zustürzen auf 40 °C erwärmen und durch Zutropfen von Natronlauge den pH auf 6,5-7 halten. Nach etwa 3 h ist die Reaktion beendet, der so erhaltene Farbstoff ist mit dem in Beispiel 1 erhaltenen identisch.

Beispiel 3

Man kann den in Beispiel 1 beschriebenen Farbstoff auch wie folgt erhalten :

18,8 Teile 1,3-Phenylendiamin-4-sulfonsäure bei pH 7 und 0° in 250 Teilen Wasser lösen und 18,4 Teile Cyanurchlorid zustürzen. Bei 0-5° nachrühren und dabei den pH durch Zutropfen von 52 Teilen 2-normaler Natronlauge auf 4-5 halten. Sobald keine Lauge mehr aufgenommen wird, 32 Teile Dehydrothio-p-toluidin-7-sulfosäure, neutral gelöst in 250 Teilen Wasser, zur Reaktionsmischung geben, auf 40° erwärmen und den pH durch weitere Zugabe von Natronlauge bei 7-8 halten. Wenn die Kondensation vollständig ist, auf 0° abkühlen. Mit 25 Teilen konzentrierter Salzsäure ansäuern und mit 25 Teilen 4-n Natriumnitritlösung diazotieren. Kurz nachrühren, einen evtl. Ueberschuss an Nitrit mit Sulfaminsäure zerstören und eine neutrale Lösung von 19,6 Teilen 1-Aethyl-3-carbamoyl-4-methyl-6-hydroxy-pyridon-(2) in 100 Teilen Wasser zulaufen lassen. Durch Zugabe von Natronlauge nun zunächst den pH auf 4,5 stellen, nach beendigter Kupplung auf 7 erhöhen und das Produkt durch Zutropfen zu einer Suspension von 480 g Kochsalz in 400 ml Wasser ausfällen.

Beispiel 4

18,8 Teile 1,3-Phenylendiamin-4-sulfosäure bei pH 7 und 0 °C in 250 Teilen Wasser lösen und 18,4 Teile Cyanurchlorid zustürzen. Bei 0-5 °C nachrühren und den pH durch Zutropfen von 52 Teilen 2 n Natronlauge auf 4-5 halten. Nach beendeter Kondensation auf pH 7,5 stellen, mit 25 Teilen 4-n Natriumnitrit-Lösung versetzen und zu einer Mischung von 25 Teilen konzentrierter Salzsäure und 100 Teilen Eis tropfen. Nach der Diazotierung kurz nachrühren, einen eventuellen Ueberschuss an Nitrit wegnehmen und eine neutrale Lösung von 19,6 Teilen 1-Aethyl-3-carbamoyl-4-methyl-6-hydroxypyridon-2 in 100 Teilen Wasser zulaufen lassen. Durch Zugabe von Natronlauge zunächst auf pH 4,5 stellen, nach beendeter Kupplung auf pH 7 stellen und 32 Teile Dehydrothio-p-toluidin-7-sulfosäure, in 150 Teilen Wasser neutral gelöst, zugeben. Langsam auf 40 °C erwärmen und dabei den pH durch Zutropfen von Natronlauge auf 7-8 halten. Wenn die Kondensation zu Ende ist, klärfiltrieren und die Reaktionslösung eindampfen. Der so gewonnene Farbstoff ist mit dem in Beispiel 1 erhaltenen Farbstoff identisch.

Geht man wie in den Beispielen 1-4 beschrieben vor, verwendet jedoch die in der folgenden Tabelle beschriebenen Kupplungskomponenten, Diazokomponenten, Triazinhalogenide und Aminophenylbenzthiazole oder aus diesen hergestellten Zwischenprodukte, so erhält man weitere grünstichig gelbe bis gelbe Reaktivfarbstoffe, die ausgezeichnete Eichtheiten besitzen.

(Siehe Tabellen Seite 8 ff.)

| Nr. | Kupplungskomponente | Diazokomponente | Triazinhalogenid | Aminophenyl-benzthiazol |
|---|---|---|---|---|
| 1 | 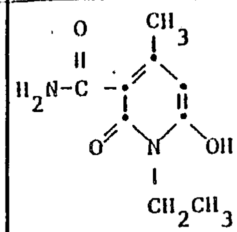 | 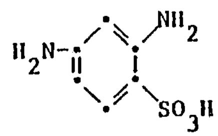 | 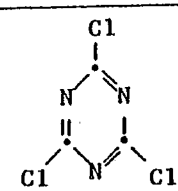 | 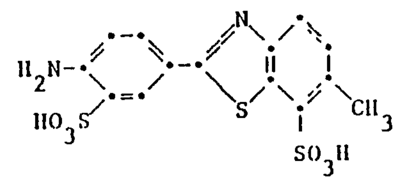 |
| 2 | 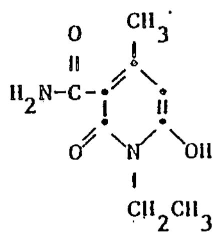 | 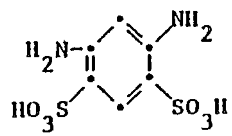 | 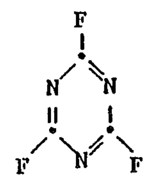 | 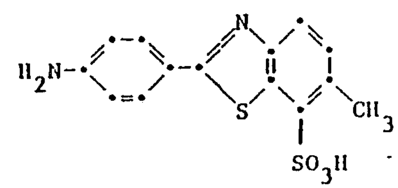 |
| 3 | 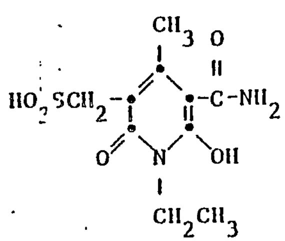 | 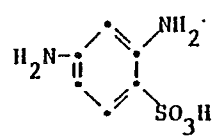 | 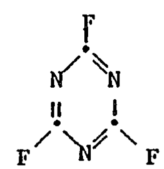 | 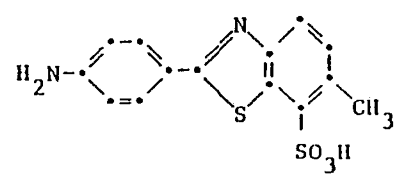 |

(Fortsetzung)

| Nr. | Kupplungskomponente | Diazokomponente | Triazinhalogenid | Aminophenyl-benzthiazol |
|---|---|---|---|---|
| 4 | 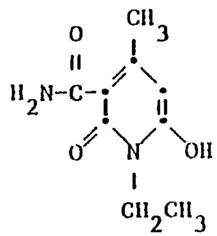 | 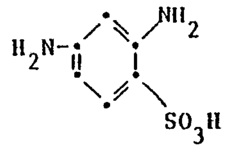 | 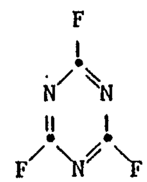 | 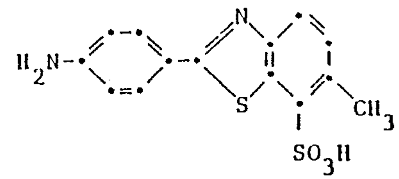 |
| 5 | 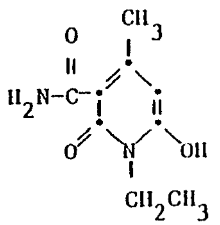 | 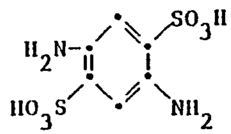 | 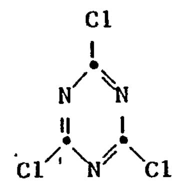 | 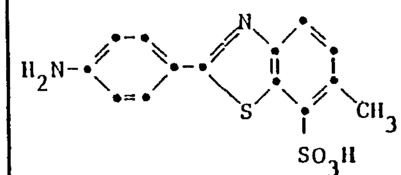 |
| 6 | 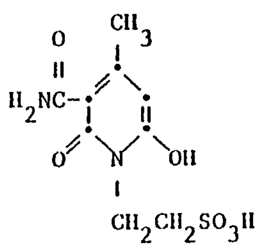 | 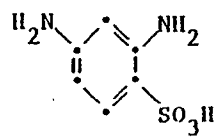 | 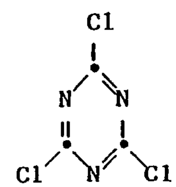 | 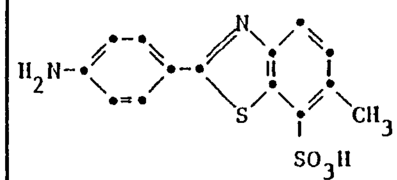 |

(Fortsetzung)

| Nr. | Kupplungskomponente | Diazokomponente | Triazinhalogenid | Aminophenyl-benzthiazol |
|---|---|---|---|---|
| 7 | 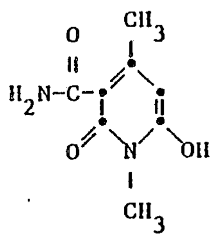 | 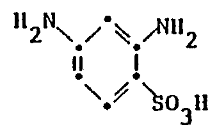 | 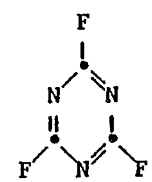 | 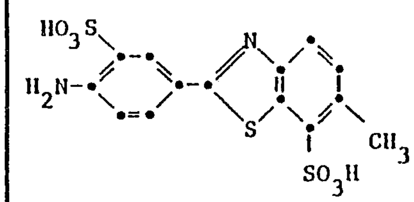 |
| 8 | 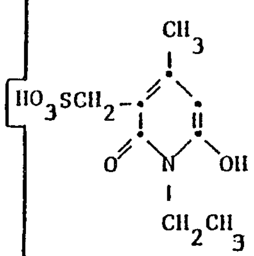 | 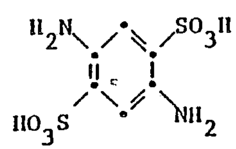 | 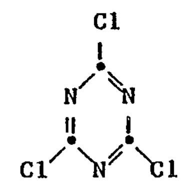 | 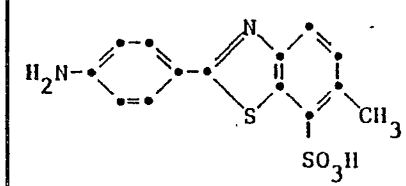 |

(Fortsetzung)

| Nr. | Kupplungskomponente | Diazokomponente | Triazinhalogenid | Aminophenyl-benzthiazol |
|---|---|---|---|---|
| 9 | 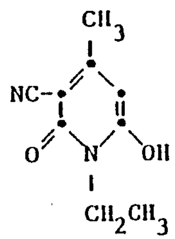 | 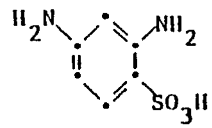 | 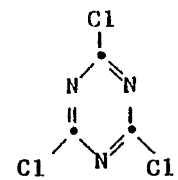 | 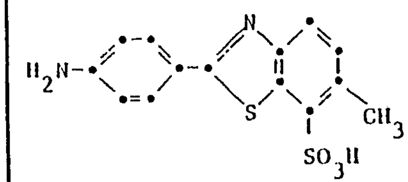 |
| 10 | 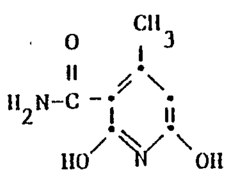 | 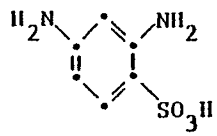 | 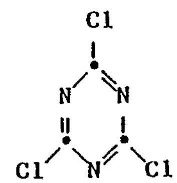 | 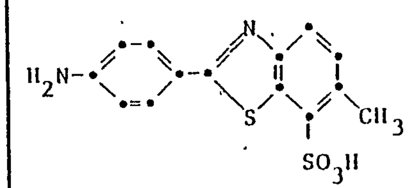 |

(Fortsetzung)

| Nr. | Kupplungskomponente | Diazokomponente | Triazinhalogenid | Aminophenyl-benzthiazol |
|---|---|---|---|---|
| 11 | 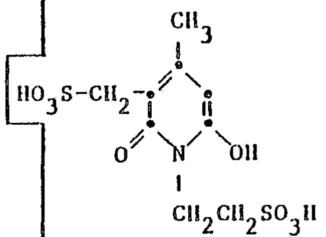 | 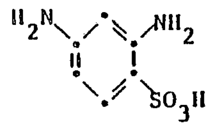 | 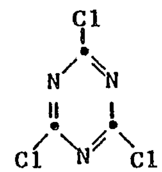 | 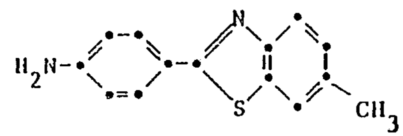 |
| 12 | 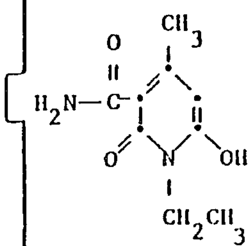 | 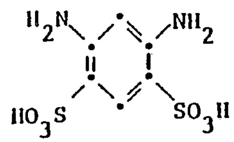 | 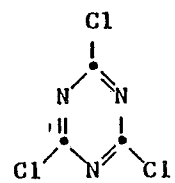 | 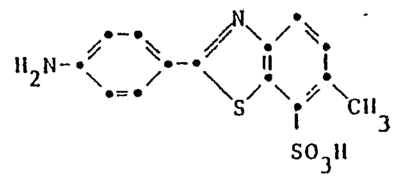 |

(Fortsetzung)

| Nr. | Kupplungskomponente | Diazokomponente | Triazinhalogenid | Aminophenyl-benzthiazol |
|---|---|---|---|---|
| 13 | 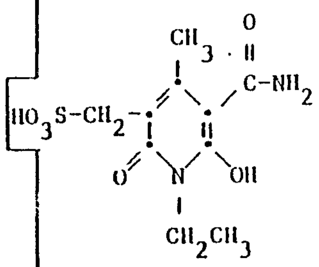 | 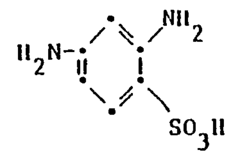 | 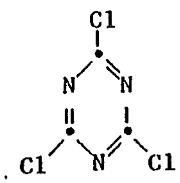 | 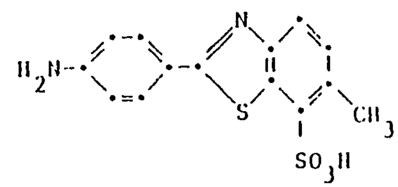 |
| 14 | 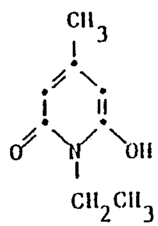 | 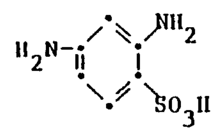 | 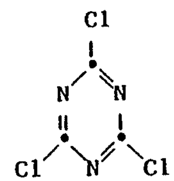 | 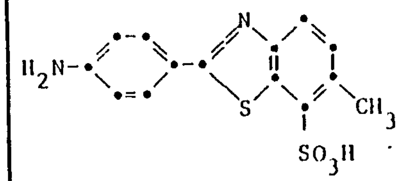 |
| 15 | 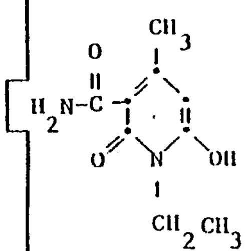 | 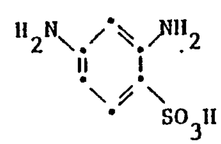 | 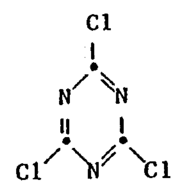 | 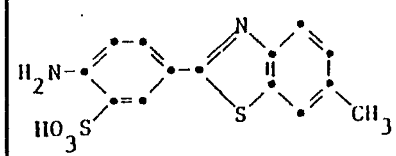 |

(Fortsetzung)

| Nr. | Kupplungskomponente | Diazokomponente | Triazinhalogenid | Aminophenyl-benzthiazol |
|---|---|---|---|---|
| 16 | 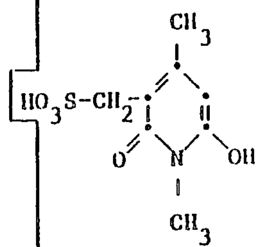 | 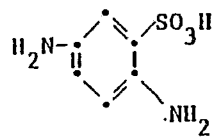 | 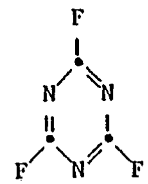 | 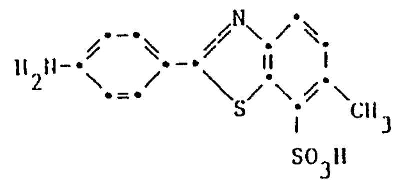 |
| 17 | 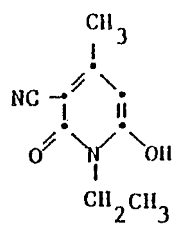 | 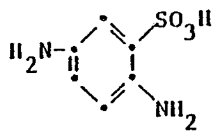 | 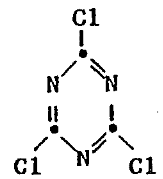 | 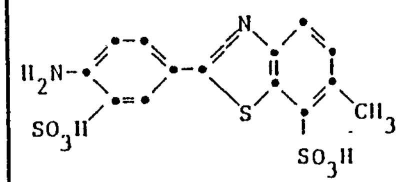 |
| 18 | 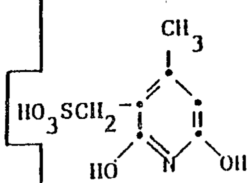 | 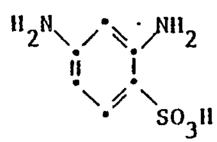 | 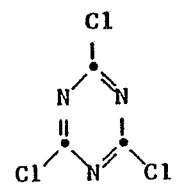 | 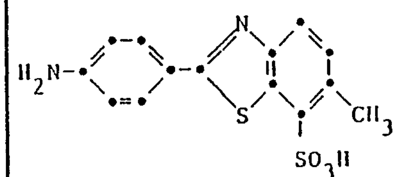 |

(Fortsetzung)

| Nr. | Kupplungskomponente | Diazokomponente | Triazinhalogenid | Aminophenyl-benzthiazol |
|---|---|---|---|---|
| 19 | 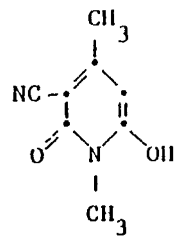 | 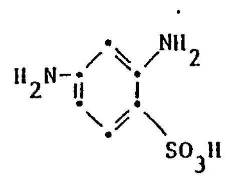 | 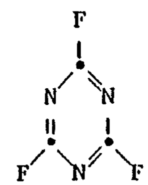 | 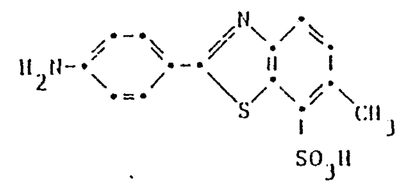 |
| 20 | 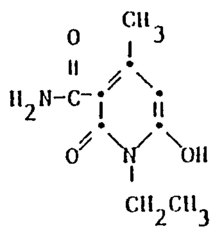 | 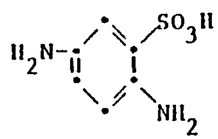 | 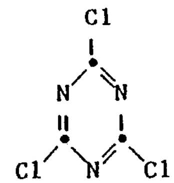 | 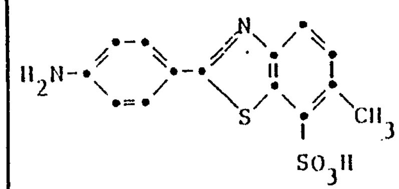 |
| 21 | 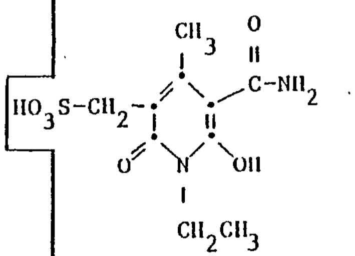 | 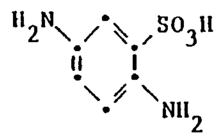 | 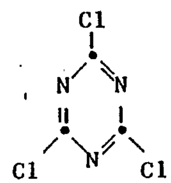 | 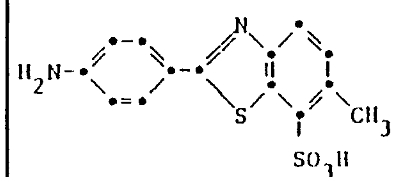 |

(Fortsetzung)

| Nr. | Kupplungskomponente | Diazokomponente | Triazinhalogenid | Aminophenyl-benzthiazol |
|---|---|---|---|---|
| 22 | 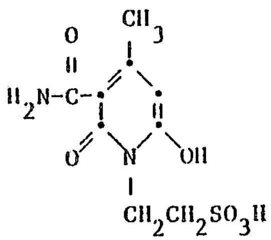 | 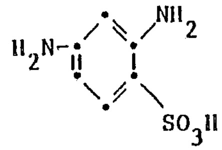 | 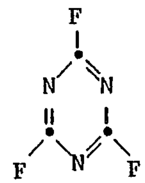 | 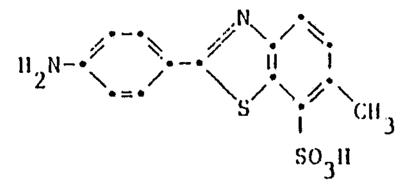 |
| 23 | 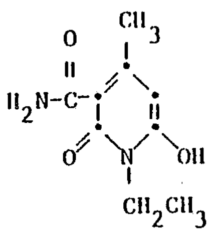 | 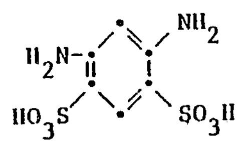 | 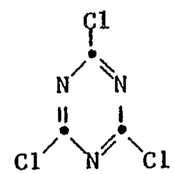 | 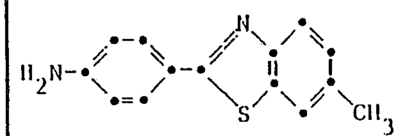 |
| 24 | 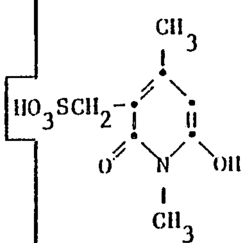 | 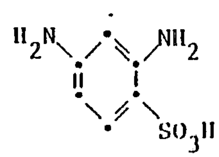 | 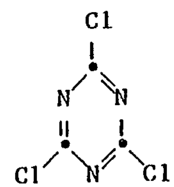 | 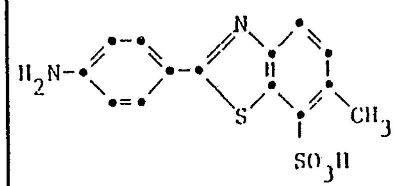 |

(Fortsetzung)

| Nr. | Kupplungskomponente | Diazokomponente | Triazinhalogenid | Aminophenyl-benzthiazol |
|---|---|---|---|---|
| 25 | 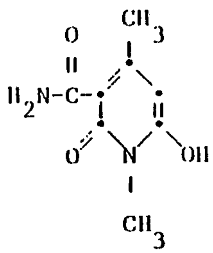 | 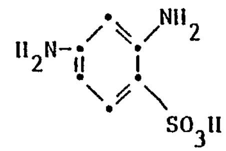 | 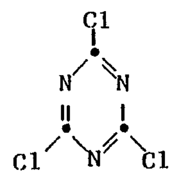 | 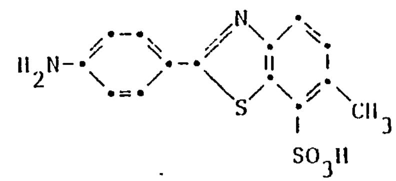 |
| 26 | 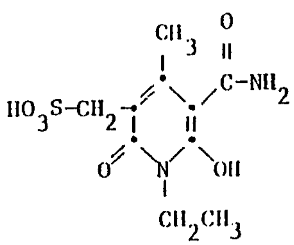 | 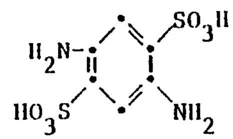 | 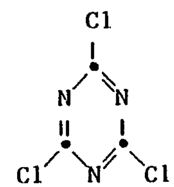 | 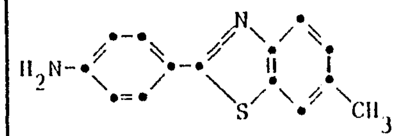 |
| 27 | 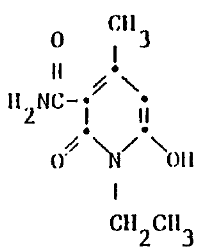 | 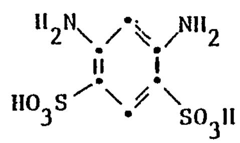 | 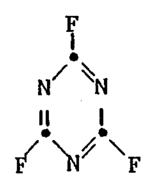 | 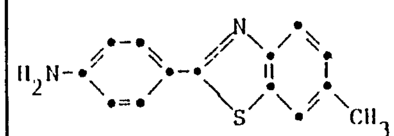 |

(Fortsetzung)

| Nr. | Kupplungskomponente | Diazokomponente | Triazinhalogenid | Aminophenyl-benzthiazol |
|---|---|---|---|---|
| 28 | 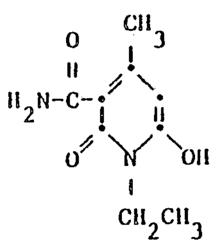 | 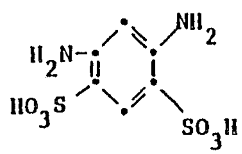 | 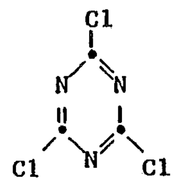 | 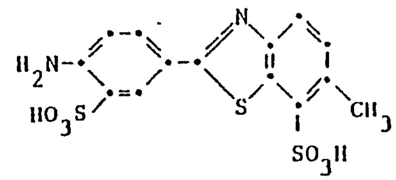 |
| 29 | 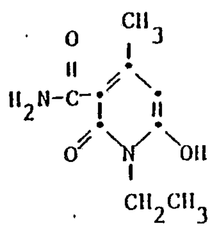 | 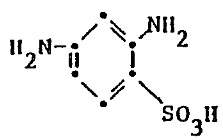 | 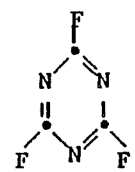 | 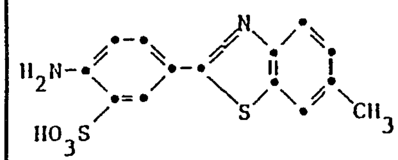 |

Färbevorschrift 1

2 Teile des gemäss Beispiel 1 erhaltenen Farbstoffes werden unter Zusatz von 5 bis 20 Teilen Harnstoff und 2 Teilen kalzinierter Soda in 100 Teilen Wasser bei 20 bis 50° gelöst. Mit der erhaltenen Lösung wird ein Baumwollgewebe imprägniert, sodass es um 60 bis 80 % seines Gewichtes zunimmt, und dann getrocknet. Danach wird während 1/2 bis 5 Minuten bei 140 bis 210° thermofixiert, dann während einer Viertelstunde in einer 0,1 %igen kochenden Lösung eines ionenfreien Waschmittels geseift, gespült und getrocknet.

Färbevorschrift 2

2 Teile des gemäss Beispiel 1 erhaltenen Farbstoffes werden in 2 000 Teilen Wasser unter Zusatz von 120 Teilen Kochsalz oder kalziniertem Glaubersalz bei 75-80° gelöst. Man geht mit 100 Teilen eines Baumwollgewebes in dieses Färbebad ein und hält die Temperatur während 30 bis 60 Minuten konstant. Danach werden 10 Teile kalzinierter Soda und 4 ml Natronlauge (36° Bé) zugegeben. Die Temperatur wird weitere 45 bis 60 Minuten bei 75 bis 80° gehalten, dann wird während 15 Minuten in einer 0,1 %igen kochenden Lösung eines ionenfreien Waschmittels geseift, gespült und getrocknet.

Färbevorschrift 3

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, sodass es um 75 % seines Gewichts zunimmt, und dann getrocknet.

Danach imprägniert man das Gewebe mit einer 20° warmen Lösung, die pro Liter 12 Gramm Natriumhydroxyd und 300 Gramm Natriumchlorid enthält, quetscht auf 75 % Gewichtszunahme ab, dämpft die Färbung 30 bis 60 Sekunden bei 100 bis 101°, spült, seift während einer Viertelstunde in einer 0,3 %igen kochenden Lösung eines ionenfreien Waschmittels, spült und trocknet.

Färbevorschrift 4

2 Teile des gemäss Tabellenbeispiel Nr. 4 erhältlichen Farbstoffes werden in 100 Teilen Wasser gelöst.

Die Lösung gibt man zu 1 900 Teilen kaltem Wasser, fügt 60 Teile Natriumchlorid zu und geht mit 100 Teilen eines Baumwollgewebes in dieses Färbebad ein.

Man steigert die Temperatur auf 60°, wobei nach 30 Minuten 40 Teile kalzinierte Soda und nochmals 60 Teile Natriumchlorid zugegeben werden. Man hält die Temperatur 30 Minuten auf 60°, spült und seift dann die Färbung während 15 Minuten in einer 0,3 %igen kochenden Lösung eines ionenfreien Waschmittels, spült und trocknet.

Druckvorschrift

2 Teile des gemäss Beispiel 1 hergestellten Farbstoffes werden unter schnellem Rühren in 100 Teile einer Stammverdickung enthaltend 45 Teile 5 %ige Natriumalginatverdickung, 32 Teile Wasser, 20 Teile Harnstoff, 1 Teil m-nitrobenzolsulfonsaures Natrium sowie 2 Teile Natriumcarbonat, eingestreut.

Mit der so erhaltenen Druckpaste bedruckt man ein Baumwollgewebe auf einer Rouleauxdruckmaschine und dämpft den erhaltenen bedruckten Stoff 4 bis 8 Minuten bei 102-104° in gesättigtem Dampf. Das bedruckte Gewebe wird dann in kaltem und heissem Wasser gründlich gespült, wobei sich die nicht chemisch fixierten Anteile sehr leicht von der Faser entfernen lassen, und anschliessend getrocknet.

**Patentansprüche**

1. Reaktivfarbstoffe der Formel

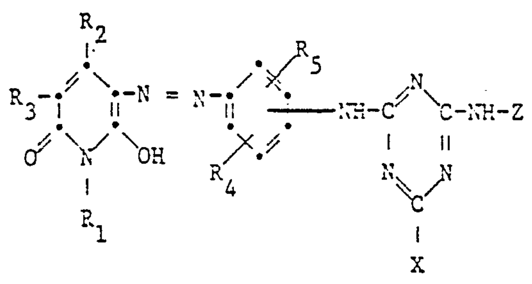

(1)

worin $R_1$ Wasserstoff oder gegebenenfalls substituiertes $C_{1-4}$-Alkyl oder Phenyl, $R_2$ Wasserstoff oder gegebenenfalls substituiertes $C_{1-4}$-Alkyl, $R_3$ Wasserstoff, Cyano, Carbamoyl oder Sulfomethyl, $R_4$ und $R_5$ unabhängig voneinander Wasserstoff, $C_{1-4}$-Alkyl, $C_{1-4}$-Alkoxy, Halogen, Carboxy oder Sulfo, X Fluor, Chlor oder Brom, und Z ein gegebenenfalls substituierter Benzthiazolyl-(2)-phenyl-Rest ist.

2. Reaktivfarbstoffe gemäss Anspruch 1, der Formel

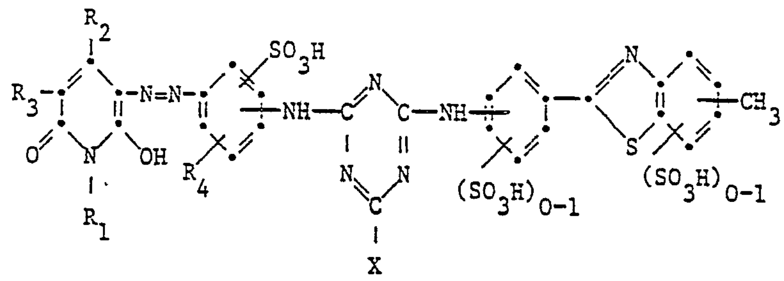

(2)

worin $R_1$, $R_2$, $R_3$ und X die in Anspruch 1 angegebenen Bedeutungen haben, und $R_4$ Wasserstoff, Methyl, Methoxy, Chlor oder Sulfo ist.

3. Reaktivfarbstoffe gemäss Anspruch 2, worin $R_1$ Wasserstoff oder gegebenenfalls substituiertes $C_{1-4}$-Alkyl, und $R_2$ $C_{1-4}$-Alkyl ist, und $R_3$, $R_4$ und X die in Anspruch 2 angegebenen Bedeutungen haben.

4. Reaktivfarbstoffe gemäss Anspruch 3, worin $R_1$ Wasserstoff, Methyl, Aethyl oder Sulfoäthyl, und $R_2$ Methyl ist, und $R_3$, $R_4$ und X die in Anspruch 3 angegebenen Bedeutungen haben.

5. Reaktivfarbstoffe gemäss Anspruch 4, worin $R_3$ Carbamoyl ist, und $R_1$, $R_2$, $R_4$ und X die in Anspruch 4 angegebenen Bedeutungen haben.

6. Reaktivfarbstoffe gemäss Anspruch 3, worin $R_3$ Carbamoyl ist, und $R_1$, $R_2$, $R_4$ und X die in Anspruch 3 angegebenen Bedeutungen haben.

7. Reaktivfarbstoffe gemäss Anspruch 6, der Formel

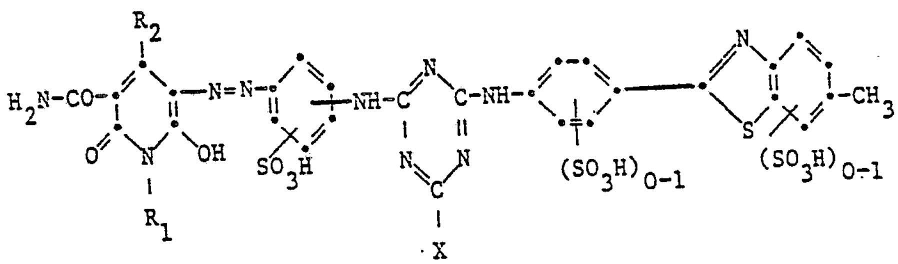

(3)

worin $R_1$ Wasserstoff oder $C_{1-4}$-Alkyl, $R_2$ $C_{1-4}$-Alkyl, und X Fluor, Chlor oder Brom ist.

8. Reaktivfarbstoff gemäss Anspruch 5 oder 7, der Formel

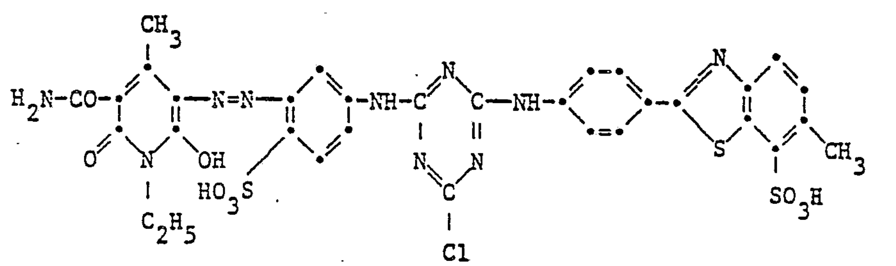

(4)

9. Verfahren zur Herstellung von Reaktivfarbstoffen gemäss Anspruch 1, dadurch gekennzeichnet, dass man in beliebiger Reihenfolge 6-Hydroxypyridone-(2) der Formel

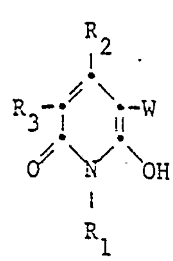

(5)

worin W Wasserstoff oder Carbamoyl ist, Diaminobenzole der Formel

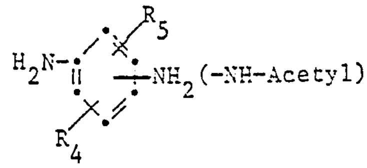

(6)

2,4,6-Trihalogen-s-triazine der Formel

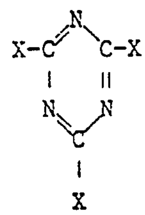

(7)

und Benzthiazolyl-(2)-phenylamine der Formel

$$H_2N—Z \quad (8)$$

durch Diazotierung, Kupplung und Kondensation zu Reaktivfarbstoffen der Formel (1) umsetzt.

10. Verfahren gemäss Anspruch 9, zur Herstellung des Reaktivfarbstoffes gemäss Anspruch 8, dadurch gekennzeichnet, dass man 1-Amino-3-acetylamino-benzol-6-sulfonsäure diazotiert und auf 1-Aethyl-4-methyl-5-carbamoyl-6-hydroxy-pyridon-(2) kuppelt, die Acetylgruppe durch Verseifung abspaltet, die erhaltene Aminomonoazoverbindung mit Cyanurchlorid kondensiert, und das erhaltene primäre Kondensationsprodukt mit Dehydrothio-p-toluidin-7-sulfonsäure kondensiert, so dass der Reaktivfarbstoff der Formel (4) erhalten wird.

11. Verfahren gemäss Anspruch 9, zur Herstellung des Reaktivfarbstoffes gemäss Anspruch 8, dadurch gekennzeichnet, dass man 1-Amino-3-acetyl-amino-benzol-6-sulfonsäure diazotiert und auf 1-Aethyl-4-methyl-5-carbamoyl-6-hydroxypyridon-(2) kuppelt, und die Acetylgruppe durch Verseifung abspaltet, ferner Cyanurchlorid mit Dehydrothio-p-toluidin-7-sulfonsäure kondensiert, und beide Zwischenprodukte miteinander kondensiert.

12. Verwendung der Reaktivfarbstoffe gemäss den Ansprüchen 1 bis 8, bzw. der gemäss den Ansprüchen 8 bis 11 erhältlichen Reaktivfarbstoffe zum Färben und Bedrucken.

13. Verwendung gemäss Anspruch 12 zum Färben von Cellulosefasern.

## Claims

1. A reactive dye of the formula

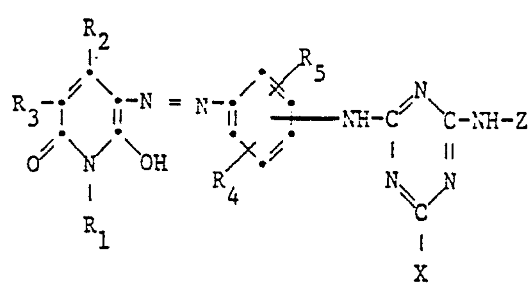

(1)

wherein $R_1$ is hydrogen or unsubstituted or substituted $C_1$-$C_4$ alkyl or phenyl, $R_2$ is hydrogen or unsubstituted or substituted $C_1$-$C_4$ alkyl, $R_3$ is hydrogen, cyano, carbamoyl or sulfomethyl, $R_4$ and $R_5$ are each independently hydrogen, $C_1$-$C_4$ alkyl, $C_1$-$C_4$ alkoxy, halogen, carboxy or sulfo, X is fluorine, chlorine or bromine, and Z is an unsubstituted or substituted benzthiazolyl-(2)-phenyl radical.

2. A reactive dye according to claim 1, of the formula

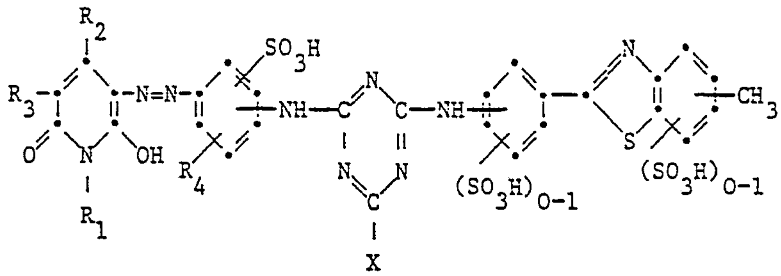

(2)

wherein $R_1$, $R_2$, $R_3$ and X are as defined in claim 1 and $R_4$ is hydrogen, methyl, methoxy, chlorine or sulfo.

3. A reactive dye according to claim 2, wherein $R_1$ is hydrogen or unsubstituted or substituted $C_1$-$C_4$ alkyl, $R_2$ is $C_1$-$C_4$ alkyl, and $R_3$, $R_4$ and X are as defined in claim 2.

4. A reactive dye according to claim 3, wherein $R_1$ is hydrogen, methyl, ethyl or sulfoethyl, $R_2$ is methyl, and $R_3$, $R_4$ and X are as defined in claim 3.

5. A reactive dye according to claim 4, wherein $R_3$ is carbamoyl and $R_1$, $R_2$, $R_4$ and X are as defined in claim 4.

6. A reactive dye according to claim 3, wherein $R_3$ is carbamoyl and $R_1$, $R_2$, $R_4$ and X are as defined in claim 3.

7. A reactive dye according to claim 6, of the formula

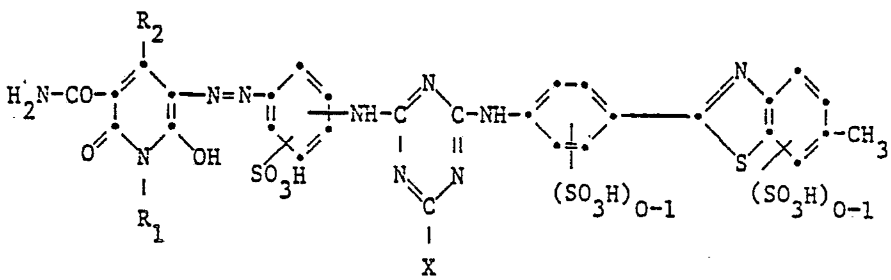

(3)

where in $R_1$ is hydrogen or $C_1$-$C_4$ alkyl, $R_2$ is $C_1$-$C_4$ alkyl, and X is fluorine, chlorine or bromine.

8. A reactive dye according to either of claims 5 or 7, of the formula

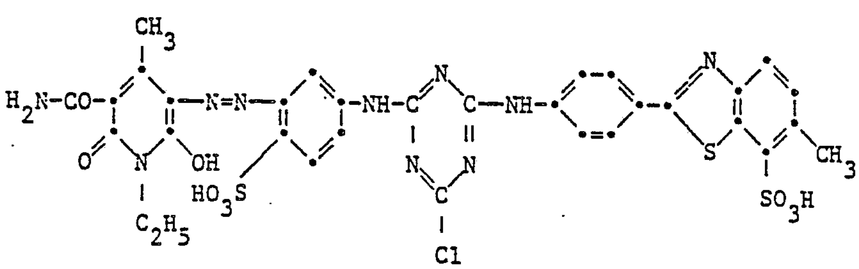

(4)

9. A process for the preparation of a reactive dye according to claim 1, which comprises reacting in any order, a 6-hydroxypyrid-2-one of the formula

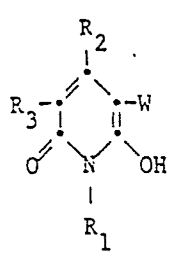

(5)

wherein W is hydrogen or carbamoyl, a diaminobenzene of the formula

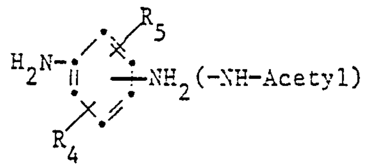

(6)

a 2,4,6-trihalo-s-triazine of the formula

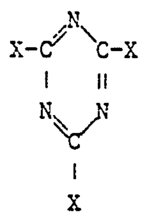

(7)

and a benzthiazolyl-(2)-phenylamine of the formula

$$H_2N—Z \quad (8)$$

by diazotisation, coupling and condensation.

10. A process according to claim 9 for the preparation of the reactive dye as claimed in claim 8, which comprises diazotising 1-amino-3-acetylaminobenzene-6-sulfonic acid and coupling the diazonium compound to 1-ethyl-4-methyl-5-carbamoyl-6-hydroxyprid-2-one, removing the acetyl group by saponification, condensing the aminomonoazo compound so obtained with cyanuric chloride, and condensing the primary condensation product so obtained with dehydrothio-p-toluidine-7-sulfonic acid to obtain the reactive dye of the formula (4).

11. A process according to claim 9 for the preparation of the reactive dye as claimed in claim 8, which comprises diazotising 1-amino-3-acetylaminobenzene-6-sulfonic acid and coupling the diazonium compound to 1-ethyl-4-methyl-5-carbamoyl-6-hydroxypyrid-2-one, removing the acetyl group by saponification, and also condensing cyanuric chloride with dehydrothio-p-toluidine-7-sulfonic acid and condensing both intermediates with each other.

12. The use of a reactive dye as claimed in any one of claims 1 to 8 or obtained by a process as claimed in any one of claims 9 to 11 for dyeing or printing.

13. The use according to claim 12, for dyeing cellulose fibres.

**Revendications**

1. Colorants réactifs de formule

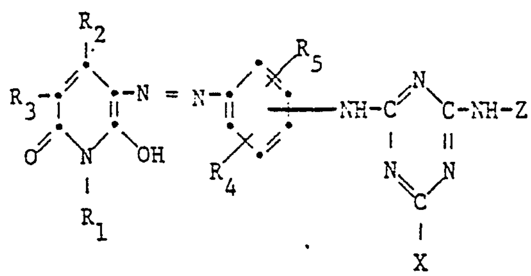

(1)

dans laquelle $R_1$ représente un atome d'hydrogène ou un groupe alkyle en $C_{1-4}$ ou phényle, éventuellement substitué ; $R_2$ représente un atome d'hydrogène ou un groupe alkyle en $C_{1-4}$ éventuellement substitué ; $R_3$ représente un atome d'hydrogène ou un groupe cyano, carbamyle ou sulfométhyle ; $R_4$ et $R_5$ représentent, indépendamment l'un de l'autre, un atome d'hydrogène ou d'halogène, ou un groupe alkyle en $C_{1-4}$, alcoxy en $C_{1-4}$, carboxy ou sulfo ; X est un atome de fluor, de chlore ou de brome ; et Z est un reste benzothiazolyl-(2)-phényle éventuellement substitué.

2. Colorants réactifs selon la revendication 1, de formule

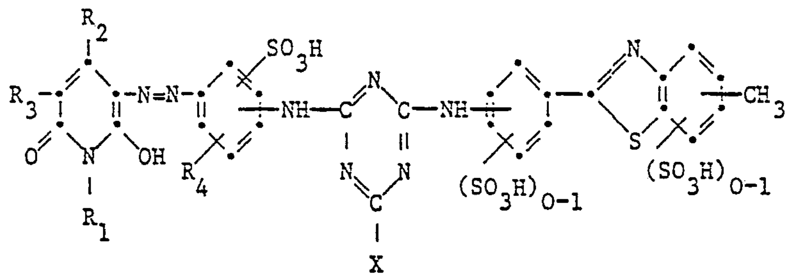

(2)

dans laquelle $R_1$, $R_2$, $R_3$ et X ont les significations données dans la revendication 1, et $R_4$ est un atome d'hydrogène ou de chlore, ou un groupe méthyle, méthoxy ou sulfo.

3. Colorants réactifs selon la revendication 2, dans lesquels $R_1$ est un atome d'hydrogène ou un groupe alkyle en $C_{1-4}$ éventuellement substitué, et $R_2$ est un groupe alkyle en $C_{1-4}$, et $R_3$, $R_4$ et X ont les significations données dans la revendication 2.

4. Colorants réactifs selon la revendication 3, dans lesquels $R_1$ est un atome d'hydrogène ou un groupe méthyle, éthyle ou sulfoéthyle et $R_2$ est un groupe méthyle, et $R_3$, $R_4$ et X ont les significations données dans la revendication 3.

5. Colorants réactifs selon la revendication 4, dans lesquels $R_3$ est le groupe carbamyle et $R_1$, $R_2$, $R_4$ et X ont les significations données dans la revendication 4.

6. Colorants réactifs selon la revendication 3, dans lesquels $R_3$ est le groupe carbamyle et $R_1$, $R_2$, $R_4$ et X ont les significations données dans la revendication 3.

7. Colorants réactifs selon la revendication 6, de formule

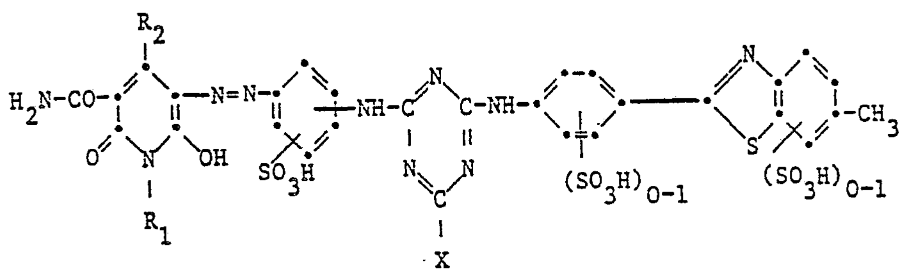

(3)

dans laquelle $R_1$ est un atome d'hydrogène ou un groupe alkyle en $C_{1-4}$ ; $R_2$ est un groupe alkyle en $C_{1-4}$ ; et X est un atome de fluor, de chlore ou de brome.

8. Colorant réactif selon la revendication 5 ou 7, de formule

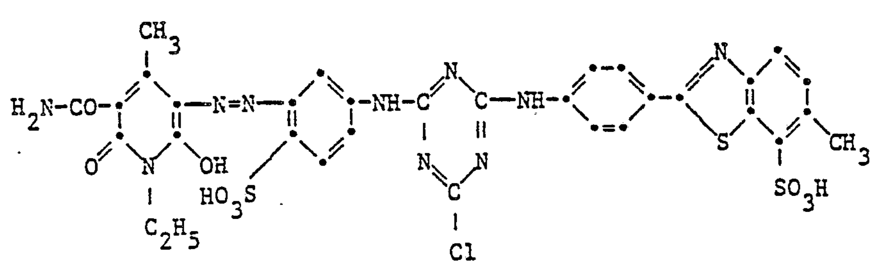

(4)

9. Procédé pour la préparation de colorants réactifs selon la revendication 1, caractérisé par le fait que l'on fait réagir, dans un ordre quelconque, des 6-hydroxypyridones-(2) de formule

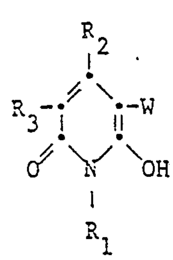

(5)

dans laquelle W est un atome d'hydrogène ou le groupe carbamyle, des diaminobenzènes de formule

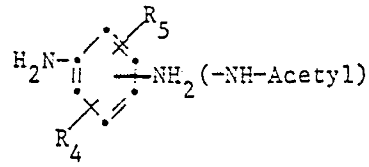

(6)

des 2,4,6-trihalogéno-s-triazines de formule

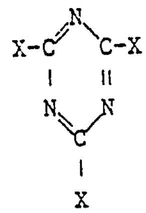

(7)

et des benzothiazolyl-(2)-phénylamines de formule

$$H_2N—Z \qquad (8)$$

par diazotation, copulation et condensation, pour aboutir aux colorants réactifs de formule (1).

10. Procédé selon la revendication 9, pour la préparation du colorant réactif selon la revendication 8, caractérisé par le fait que l'on diazote l'acide 1-amino-3-acétylamino-benzène-6-sulfonique et on le fait copuler sur la 1-éthyl-4-méthyl-5-carbamyl-6-hydroxy-pyridone-(2), on sépare le groupe acétyle par saponification, on condense le composé amino-monoazoïque obtenu avec le chlorure de cyanuryle, puis on condense le produit de condensation primaire obtenu avec de l'acide déhydrothio-p-toluidine-7-sulfonique, de manière à obtenir le colorant réactif de formule (4).

11. Procédé selon la revendication 9, pour la préparation du colorant réactif selon la revendication 8, caractérisé par le fait que l'on diazote l'acide 1-amino-3-acétylamino-benzène-6-sulfonique et on le fait copuler sur la 1-éthyl-4-méthyl-5-carbamyl-6-hydroxypyridone-(2), et on sépare le groupe acétyle par saponification, on condense ensuite du chlorure de cyanuryle avec de l'acide déhydrothio-p-toluidine-7-sulfonique, puis on condense les deux produits intermédiaires l'un avec l'autre.

12. Utilisation des colorants réactifs selon les revendications 1 à 8 ou des colorants réactifs obtenus selon les revendications 8 à 11, pour la teinture et l'impression.

13. Utilisation selon la revendication 12, pour la teinture de fibres cellulosiques.